Europäisches Patentamt

European Patent Office

Office européen des brevets

(19)

(11) Veröffentlichungsnummer : **0 062 857**

**B1**

(12) **EUROPÄISCHE PATENTSCHRIFT**

(45) Veröffentlichungstag der Patentschrift :
10.09.86

(21) Anmeldenummer : 82102811.5

(22) Anmeldetag : 02.04.82

(51) Int. Cl.⁴ : **H 01 M 10/39, H 01 M 2/06**

(54) **Wiederaufladbare galvanische Einzelzelle.**

(30) Priorität : 09.04.81 DE 3114348

(43) Veröffentlichungstag der Anmeldung :
20.10.82 Patentblatt 82/42

(45) Bekanntmachung des Hinweises auf die Patenterteilung : 10.09.86 Patentblatt 86/37

(84) Benannte Vertragsstaaten :
BE FR GB IT NL

(56) Entgegenhaltungen :
EP-A- 0 018 190
DE-B- 1 771 081
DE-B- 2 240 278
GB-A- 2 039 132

(73) Patentinhaber : BROWN, BOVERI & CIE Aktiengesellschaft
Kallstadter Strasse 1
D-6800 Mannheim 31 (DE)

(72) Erfinder : Knödler, Reinhard, Dr.
Heinrich-Fuchs-Strasse 122
D-6900 Heidelberg (DE)
Erfinder : Harbach, Friedrich, Dr.
Bürgerstrasse 2
D-6900 Heidelberg (DE)
Erfinder : Weiler, Ludwig, Dr.
Schröderstrasse 31
D-6900 Heidelberg (DE)

(74) Vertreter : Kempe, Wolfgang, Dr. et al
c/o Brown, Boveri & Cie AG Postfach 351
D-6800 Mannheim 1 (DE)

**Beschreibung**

Die Erfindung bezieht sich auf eine wiederaufladbare galvanische Einzelzelle gemäß dem Oberbegriff des Patentanspruches 1.

Es ist eine wiederaufladbare galvanische Einzelzelle bekannt, die Natrium und Schwefel als Reaktionssubstanzen aufweist, wobei die beiden Reaktionspartner durch ein Festelektrolytrohr getrennt sind. Dieses Rohr besitzt bei der Arbeitstemperatur der Na/S-Zelle von 300 bis 350 °C eine hohe Natriumionenleitfähigkeit. Der Schwefel ist in einem elektronisch leitenden Graphitfilz aufgesaugt. Dieser bildet die Fortsetzung des als positiver Stromanschluß dienenden Metallgehäuses. Mit seiner großen Oberfläche sorgt es dafür, daß die elektrochemischen Prozesse genügend schnell ablaufen. Als negativer Stromanschluß dient der über einen Metallstift mit dem Natrium in Kontakt stehende metallische Deckel. Bei der Entladung, — wenne die beiden Stromanschlüsse über eine Last miteinander verbunden werden — wandern Natriumionen durch das Elektrolytrohr zum Schwefel. Dabei reagieren die Natriumionen mit dem Schwefel unter Aufnahme von Elektronen zu Natriumpolysulfid. Im Laufe der Entladung wird also immer mehr Natrium aus dem Innenraum verbraucht, daher sinkt der Natriumpegel. Gleichzeitig wird immer mehr Natriumpolysulfid gebildet, so daß der Pegel steigt. Die voll entladene Zelle enthält im Außenraum $Na_2S_3$ als Reaktionsprodukt.

Bei der Wiederaufladung der Zelle werden alle Vorgänge umgekehrt. Das Reaktionsprodukt $Na_2S_3$ wird zersetzt, die Natriumionen wandern durch den Festelektrolyten zurück in den Innenraum, und Schwefel bleibt im Außenraum zurück. Die Betriebstemperatur der Na/S-Zelle liegt oberhalb der Schmelzpunkte von Natrium, Schwefel und der Natriumpolysulfide, daher sind die Reaktanden und Reaktionsprodukte flüssig. Auf diese Weise kann der für den Ablauf der elektrochemischen Reaktionen notwendige Kontakt zwischen Festelektrolyt und Reaktanden dauernd auftrecht erhalten werden. Zur Aufrechterhaltung der Betriebstemperatur, die wesentlich oberhalb der Umgebungstemperatur liegt, werden bekannterweise die Zellen mit einem isolierenden Gehäuse umgeben.

Eine der wichtigsten Komponenten einer Na/S-Zelle ist der Festelektrolyt. Die Eignung von Beta-Aluminiumoxyd (Beta-$Al_2O_3$) als Elektrolyt für die besagten Zellen beruht auf seiner hohen Leitfähigkeit und Lebensdauer. Bei einer derartigen Einzelzelle kann die Abdichtung des Natrium- und des Schwefelraumes derart durchgeführt werden, daß der rohrförmige Elektrolyt an seinem offenen Ende einen Bund aufweist, über den eine starre Verbindung mit dem metallischen Gehäuse der Einzelzelle hergestellt werden kann. Die starre Verbindung wird gewöhnlich mittels einer aus Edelstahl bestehenden Platte hergestellt, und als Dichtung zwischen dem Elektrolyten und dem Edelstahl können Ringe aus Aluminium verwendet werden. Die Edelstahlplatte wiederum kann fest mit dem Gehäuse verbunden werden. Dieses Bauprinzip bringt es mit sich, daß der keramische Elektrolyt infolge der starren Verbindung mit dem Gehäuse alle Druckunterschiede, die insbesondere durch Temperaturunterschiede oder durch Änderung des Ladezustandes auftreten können, auffangen muß. Da die Keramik von Natur aus spröde ist, kann es bei einer derartigen Anordnung leicht zu einem Bruch der Keramik (Elektrolyt) und damit zu einem Ausfall der gesamten Zelle kommen.

Aus der DE-AS 17 71 081 ist· eine Akkumulatorbatterie bekannt, die auf der Basis von Natrium und Schwefel arbeitet. Die beiden Reaktandenräume sind durch einen flächigen Festelektrolyten voneinander getrennt. Um im Bedarfsfall eine Vergrößerung der Reaktandenräume zu ermöglichen, sind die seitlichen Begrenzungsflächen derselben als Faltenbalgen ausgebildet. Hierdurch ist es möglich, den Kathodenraum beim Entladen der Speicherzelle aufgrund der sich bildenden Volumenzunahme, die durch das entstehende Natriumpolysulfid verursacht wird, zu vergrößern. Die Vergrößerung des Raumes geschieht auf Kosten des Anodenraums, der dabei etwas zusammengedrückt wird. Bei der Aufladung der Speicherzelle ist der umgekehrte Vorgang möglich.

Aus der DE-AS 22 40 278 ist eine Batterie auf der Basis von Natrium und Schwefel bekannt, die ein becherförmiges Gehäuse aufweist. Dieses an seinem oberen Ende als Faltenbalg ausgebildet und weist einen nach außen gerichteten Flansch auf. Der im Inneren des Gehäuses angeordnete becherförmige Festelektrolyt ist über flanschähnliche Bauelemente mit dem nach außen gerichteten Flansch des Gehäuses verbunden.

Aus der GB-PS 20 39 132 ist eine becherförmige Speicherzelle bekannt, die einen ebenfalls becherförmig ausgebildeten Festelektrolyten im Inneren ihres Gehäuses aufweist. Dieser ist aus einem alkaliionenleitenden Material gefertigt. An seinem oberen offenen Ende weist er einen Ring aus einem keramischen Material auf. Die Abmessungen des Festelektrolyten sind so gewählt, daß zwischen seinen Außenflächen und den Innenflächen des metallischen Gehäuses ein zusammenhängender Raum verbleibt, der als Reaktandenraum dient. Dieser Raum wird durch einen Flansch verschlossen, der einen U-förmigen Querschnitt aufweist und aus einem elastischen Material gefertigt ist. Der Flansch ist zum einen mit dem oberen Ende des metallischen Gehäuses und zum anderen mit dem Keramikring des Festelektrolyten verbunden. Der Innenraum des Festelektrolyten dient als zweiter Reaktandenraum und ist durch einen ebenfalls flexibel ausgebildeten Flansch nach außenhin verschlossen. Dieser Flansch wird von einem Stromabnehmer durchsetzt, der in den Festelektrolyten hineinragt.

Der Erfindung liegt ausgehend von dem eingangs genannten Stand der Technik die Aufgabe zugrunde, eine Einzelzelle auf der Basis von Natrium und Schwefel zu schaffen, bei welcher der keramische Festelektrolyt möglichst geringen mechanischen Spannungen ausgesetzt wird.

Diese Aufgabe wird erfindungsgemäß durch die kennzeichnenden Merkmale des Patentanspruches 1 gelöst.

Einzelzellen dieser Art weisen gewöhnlich ein rohrartiges metallisches Gehäuse auf, in dem ein einseitig offener Elektrolyt koaxial angeordnet ist. Im Prinzip kann das Natrium bzw. der Schwefel entweder zwischen dem Gehäuse und dem Elektrolyten bzw. im Elektrolyten angeordnet sein. Bei Einzelzellen, bei denen der Schwefel außerhalb des Elektrolyten angeordnet und im Graphit aufgesaugt ist, kann sich der Elektrolyt am Filz abstützen. Bei einer inversen Anordnung des Schwefels und des Natriums kann die eigentliche Halterung des Elektrolyten durch einfaches Aufsetzen auf einer flexiblen Unterlage erfolgen. Die bei den alten Einzelzellen auftretende temperaturbedingte Beanspruchung der Keramik rührte im wesentlichen daher, daß der Temperaturausdehnungskoeffizient beim Stahl (Gehäuse) um ein vielfaches größer ist als der Temperaturausdehnungskoeffizient beim Elektrolyten bzw. bei dem am Elektrolyten angeglasten Alfa-Al$_2$O$_3$-Rings, was bei einer Temperaturschwankung der Batterie um mehr als 100 Grad Celsius unerwünschte Kräfte einleitet und Spannungen hervorruft, die zu Rissen bzw. Brüchen führen konnten. Bei der vorgeschlagenen Einzelzelle erfolgt die Verbindung zwischen dem Elektrolyten und dem Gehäuse bzw. zwischen dem Elektrolyten und dem Stromabnehmer über flexible Flansche, die als Faltenbälge ausgebildet sind. Hierbei können auf einfache Weise relative Bewegungen zwischen dem Elektrolyten und dem Gehäuse bzw. dem Stromabnehmer durch die Faltenbälge aufgenommen werden, ohne daß nenenswerte Spannungen zwischen den besagten Komponenten auftreten würden. Der Elektrolyt, der an seinem offenen Ende einen angeglasten Alfa-Al$_2$O$_3$-Ring aufweist, ist über diesen Ring mit dem Faltenbalg über Thermokompressionsdichtungen verbunden. Die Faltenbälge sind mit dem Gehäuse bzw. dem Stromabnehmer über Schweißverbindungen verbunden.

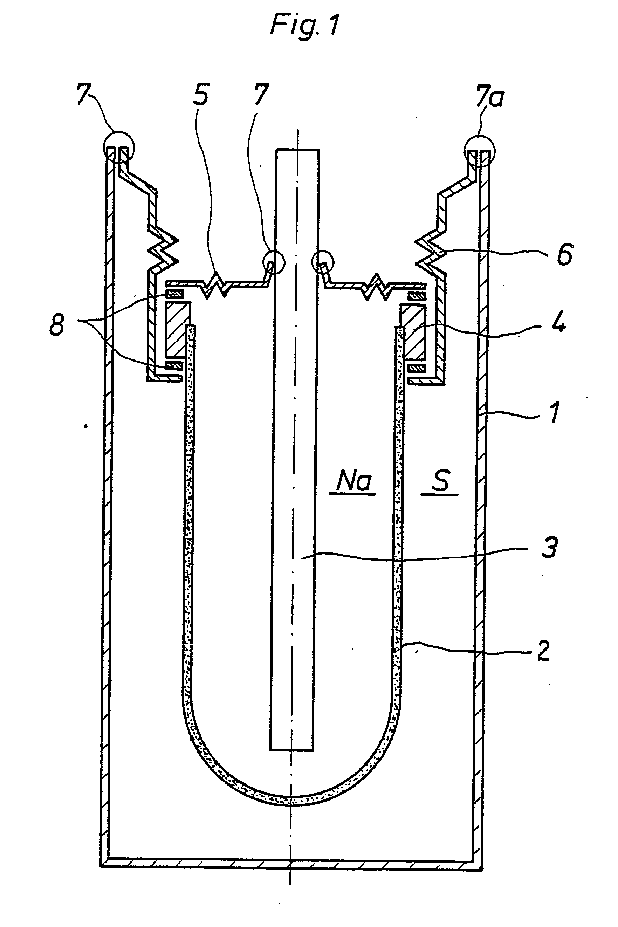

Weitere Vorteile und Merkmale der Erfindung gehen aus der folgenden Darstellung weiterer Einzelheiten sowie aus der Figur der Erfindung hervor.

Aus der schemtischen Darstellung der erfindungsgemäßen Einzelzelle ist zu entnehmen, daß in dem Gehäuse 1 der Einzelzelle, das die Form eines einseitig offenen Rohrstückes aufweist, ein Elektrolyt 2 koaxial angeordnet ist. Der Elektrolyt 2, der aus Beta-Al$_2$O$_3$ ausgebildet ist, dient zur Aufnahme des flüssigen Natriums (Na) und weist an seinem offenen Ende einen Alfa-Al$_2$O$_3$-Ring 4 auf. Axial im Elektrolyten 2 ist ein Stromabnehmer 3 angeordnet, der mit dem Elektrolyten über einen ersten flexiblen Flansch 5 verbunden ist. Der flexible Flansch 5 ist mit dem Stromabnehmer 3 durch Schweißen 7 verbunden und mit dem Alfa-Al$_2$O$_3$-Ring 4 über einen Aluminiumring 8 verbunden. Der Elektrolyt 2 ist mit dem Gehäuse 1 über einen zweiten flexiblen Flansch 6 verbunden, wobei der flexible Flansch 6 mit dem Gehäuse 1 durch Schweißen 7a verbunden ist und mit dem Alfa-Al$_2$O$_3$-Ring 4 über einen Aluminiumdichtring 8 verbunden ist. Die Dichtung selbst ist als Thermokompressionsdichtung ausgebildet. Hierbei werden die Aluminiumringe 8 mit den beiden flexiblen Flanschen 5, 6 unter Druck bei einer Temperatur von etwa 600 Grad Celsius mit dem Alfa-Al$_2$O$_3$-Ring 4 zusammengefügt. Dies ergibt eine dichte und haftfeste Verbindung. Die Flansche 5, 6 bestehen aus Edelstahl und sind als Faltenbälge 6 und 5 ausgebildet. Diese Formen gewähren eine hohe Flexibilität, so daß die Forderung nach geringer mechanischer Beanspruchung erfüllt ist. Zwischen dem Elektrolyten 2 und dem Gehäuse 1 ist der im Graphit aufgesaugte Schwefel (S) angeordnet, auf dem sich der Elektrolyt 2 abstützen kann.

Die erfindungsgemäße Zelle kann auch als Inverszelle ausgebildet sein, das heißt Natrium befindet sich außerhalb, Schwefel innerhalb des Elektrolytrohres.

## Patentanspruch

Wiederaufladbare Einzelzelle auf der Basis von Natrium und Schwefel mit einem Anodenraum und einem Kathodenraum, die durch einen alkaliionenleitenden becherförmigen Festelektrolyten (2) voneinander getrennt sind, in den ein Stromabnehmer (3) hineinragt, der am oberen Rand einen Ring (4) aus Alphaaluminiumoxid aufweist, und der durch einen ersten flexiblen Flansch (5) verschlossen ist, während der Raum zwischen ihm und dem metallischen Gehäuse (1) durch einen zweiten flexiblen Flansch (6) vorgesehen ist, dadurch gekennzeichnet, daß der Festelektrolyt (2) mit dem Stromabnehmer (3) über den ersten und mit dem metallischen Gehäuse (1) über den zweiten Flansch (5, 6) verbunden ist, daß beide Flansche faltenbalgförmig ausgebildet sind, und daß der am offenen Ende des Festelektrolyten (2) angeglaste Ring (4) mit den beiden Flanschen (5, 6) über Thermokompressionsdichtungen (8) verbinden ist.

## Claim

Rechargeable single cell based on sodium and sulphur, with an anode space and a cathode space which are separated from one another by an alkali metal ion-conducting, cam-shaped solid electrolyte (2) into which protrudes a terminal (3) and which has at its upper edge a ring (4) of alpha-alumina and which is sealed by a first flexible flange (5), whereas the space between the terminal and the metallic housing (1) is provided by a second flexible flange (6), characterized in that the solid electrolyte (2) is connected to the terminal (3) via the first flange (5) and to the metallic housing (1) via the second flange (6), that both flanges are made in the form of bellows and that the ring (4) sealed on at the open end of the solid electrolyte (2), is connected to the two flanges (5, 6) via thermal compression seals (8).

**Revendication**

Elément individuel rechargeable à base de sodium et de soufre comportant une chambre d'anode et une chambre de cathode qui sont séparées l'une de l'autre par un électrolyte solidifié (2) en forme de godet conduisant les ions alcalins dans lequel fait saillie un conducteur (3), qui comporte sur son bord supérieur une bague (4) en oxyde d'aluminium alpha, et qui est fermé par une première bride flexible (5), tandis que l'espace entre lui et le boîtier métallique (1) est fermé par une seconde bride flexible (6), caractérisé par le fait que l'électrolyte solidifié (2) est raccordé au conducteur (3) par la première bride (5) et au boîtier métallique (1) par la seconde bride (6), que les deux brides sont réalisées en forme de soufflets et que la bague (4) fondue au niveau de l'extrémité ouverte de l'électrolyte solidifié (2), est raccordée aux deux brides (5, 6) par des joints de thermocompression (8).

*Fig. 1*